# EUROPEAN PATENT SPECIFICATION

(11) **EP 3 228 476 B1**
(45) Date of publication and mention of the grant of the patent: **03.06.2020**
(21) Application number: 17164835.5
(22) Date of filing: 04.04.2017
(51) Int. Cl.: B60C 9/20

(54) **PNEUMATIC TIRE**
LUFTREIFEN
PNEUMATIQUE

(30) Priority: 05.04.2016 JP 2016075512; 22.07.2016 JP 2016144470
(43) Date of publication of application: 11.10.2017
(73) Proprietor: Sumitomo Rubber Industries, Ltd., Kobe-shi, Hyogo-ken (JP)
(72) Inventor: SUENO, Junya, Kobe-shi, Hyogo 651-0072 (JP); ITO, Hiroshi, Kobe-shi, Hyogo 651-0072 (JP)
(74) Representative: Manitz Finsterwald Patent- und Rechtsanwaltspartnerschaft mbB

(56) References cited:
- EP-A2- 0 312 300
- EP-A2- 0 435 465
- EP-A2- 0 738 615
- DE-A1-102004 029 987
- JP-A- S59 124 409
- JP-A- 2003 226 112

## Description

### [Technical Field]

The present invention relates to pneumatic tires.

### [Background Art]

A pneumatic tire includes a belt outside a carcass. The belt reinforces the carcass. In general, the belt includes an inner layer and an outer layer. The inner layer and the outer layer each include multiple cords aligned with each other, and a topping rubber. A material of the cords is typically steel.

The structure of the belt exerts an influence on steering stability and ride comfort. The structure of the belt exerts an influence also on durability of the tire. Examples where the structure of the belt is studied are disclosed in Japanese Laid-Open Patent Publication No. 2006-341633 and Japanese Laid-Open Patent Publication No. 2015-131507.

### [Prior Art document]

### [Patent Document]

[Patent Document 1] Japanese Laid-Open Patent Publication No. 2006-341633
[Patent Document 2] Japanese Laid-Open Patent Publication No. 2015-131507

JP S59 124409 A discloses a pneumatic tire according to the preamble of claim 1. A percentage of a volume of cords within a belt of the tire to a total volume of the belt is specified to 10 to 35%.

JP 2003 226112 A describes a similar tire wherein the percentage of the volume of the cords to the total volume of the belt is set at 12 to 22%.

EP 0 738 615 A2 discloses a pneumatic tire having steel cords within a belt, for which the amount of steel per unit width is restricted to a special range.

EP 0 435 465 A2 describes a tire according to a related technology.

DE 10 2004 029 987 A1 discloses a pneumatic tire having a belt with a first and a second layer comprising cords being tilted relative to a circumferential direction, wherein the cords of the first layer are tilted in a opposite direction to the cords of the second layer.

EP 0 312 300 A2 describes a tire according to a related technology.

### [Summary of the Invention]

### [Problems to be Solved by the Invention]

Steering stability is required to be further improved for a tire having a high load index. Further, in a tire having a high load index, when the belt does not have a sufficient strength, "BEL" in which the cord separates from rubber at the end of the belt, may occur. The belt is also required to have further improved durability.

For improving steering stability and durability, a method in which the number (cord density) of cords per unit width is increased in the belt, and a method in which the cords are made thick in the belt, are known. Thus, the strength of the belt is enhanced. However, in these methods, the intervals between the cords may be reduced. When an amount of rubber between the cords is reduced, durability may be reduced. Further, in these methods, the mass of the belt is increased. A centrifugal force may be enhanced in high speed running, and durability in high speed running may be reduced.

An object of the present invention is to provide a pneumatic tire having advantageously improved steering stability and durability.

### [Solution to the Problems]

This object is achieved by a tire having the features according to claim 1.

A pneumatic tire according to the present invention includes: a tread having an outer surface forming a tread surface; and a belt disposed inward of the tread in a radial direction. The belt includes an inner layer, and an outer layer layered outward of the inner layer in the radial direction. The inner layer and the outer layer each include multiple cords which are formed from steel and aligned with each other. A percentage of a volume of the cords to a total volume of the belt is greater than or equal to 11% and not greater than 14%.

The cords of the inner layer and the cords of the outer layer are tilted relative to a circumferential direction. A direction in which the cords of the inner layer are tilted relative to the circumferential direction and a direction in which the cords of the outer layer are tilted relative to the circumferential direction are opposite to each other. In the inner layer, an absolute value of a tilt angle αi of each cord relative to the circumferential direction in a center portion of the inner layer is less than an absolute value of a tilt angle βi of each cord relative to the circumferential direction in shoulder portions of the inner layer. A difference between the angle αi and the angle βi is greater than or equal to 1.5° and not greater than 2.5°. In the outer layer, an absolute value of a tilt angle αo of each cord relative to the circumferential direction in a center portion of the outer layer is less than an absolute value of a tilt angle βo of each cord relative to the circumferential direction in shoulder portions of the outer layer. A difference between the angle αo and the angle βo is greater than or equal to 1.5° and not greater than 2.5°.

Preferably, in the inner layer, a width of a gap between the cords adjacent to each other is greater than or equal to 0.4 mm, and, in the outer layer, a width of a gap between the cords adjacent to each other is greater than or equal to 0.4 mm.

Preferably, a width of a gap between the cord of the inner layer and the cord of the outer layer is greater than or equal to 0.4 mm.

Preferably, each of the inner layer and the outer layer further includes topping rubber. A complex elastic modulus E*i of the topping rubber of the inner layer at 70° is higher than or equal to 8 MPa and not higher than 12 MPa. A complex elastic modulus E*o of the topping rubber of the outer layer at 70° is higher than or equal to 8 MPa and not higher than 12 MPa.

### [Effect of the Invention]

The inventors have studied the structure of a belt in detail. As a result, it has been found that a proportion between the volume of a belt and the volume of cords included in the belt exerts a great influence on steering stability and durability. It has been found that, when the proportion is appropriately set, steering stability and durability are advantageously improved. In the tire, a percentage of the volume of the cords to the total volume of the belt is greater than or equal to 11% and not greater than 14%. Thus, the tire has advantageously improved steering stability and durability.

### [Brief Description of the Drawings]

[FIG. 1] FIG. 1 is a cross-sectional view of a part of a tire according to one embodiment of the present invention.
[FIG. 2] FIG. 2 is an enlarged cross-sectional view of a structure of a belt shown in FIG. 1.
[FIG. 3] FIG. 3 is a schematic diagram illustrating the structure of the belt shown in FIG. 1.

### [Mode for Carrying Out the Invention]

The following will describe in detail the present invention based on preferred embodiments with reference where appropriate to the accompanying drawings.

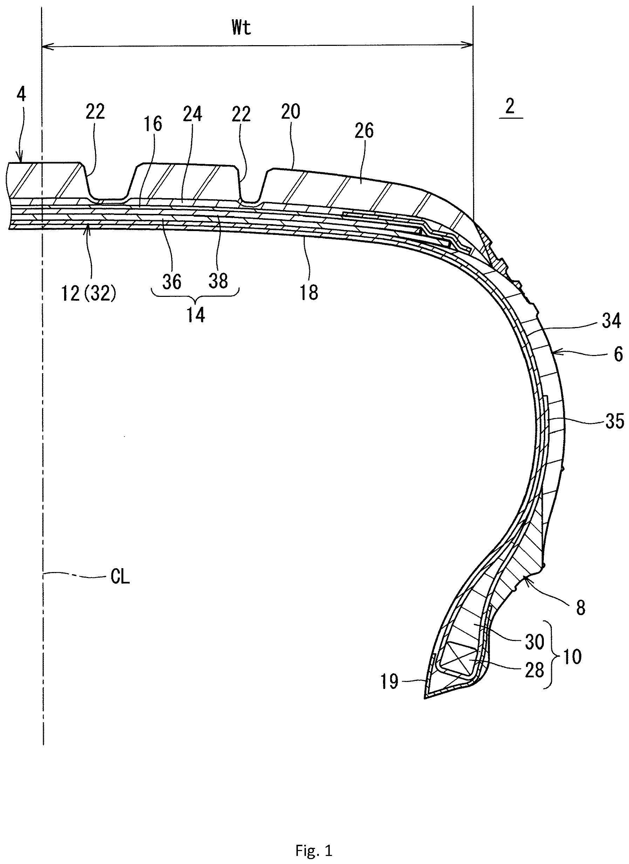

FIG. 1 shows a pneumatic tire 2. In FIG. 1, the up-down direction represents the radial direction of the tire 2, the right-left direction represents the axial direction of the tire 2, and the direction perpendicular to the surface of the drawing sheet represents the circumferential direction of the tire 2. In FIG. 1, an alternate long and short dash line CL represents the equator plane of the tire 2. The tire 2 has a shape which is symmetric about the equator plane except for a tread pattern.

The tire 2 includes a tread 4, a pair of sidewalls 6, a pair of clinches 8, a pair of beads 10, a carcass 12, a belt 14, a band 16, an inner liner 18, and chafers 19. The tire 2 is of a tubeless type. The tire 2 is mounted to a passenger car.

The tread 4 has a shape that projects outward in the radial direction. The tread 4 forms a tread surface 20 that comes into contact with a road surface. The tread surface 20 has grooves 22 formed therein. The grooves 22 form the tread pattern. The tread 4 has a base layer 24 and a cap layer 26. The cap layer 26 is disposed radially outward of the base layer 24. The cap layer 26 is layered over the base layer 24. The base layer 24 is formed from crosslinked rubber excellent in adhesiveness. A typical base rubber of the base layer 24 is natural rubber. The cap layer 26 is formed from crosslinked rubber excellent in wear resistance, heat resistance, and grip performance.

The sidewalls 6 extend almost inward from the ends, respectively, of the tread 4 in the radial direction. The sidewalls 6 are formed from crosslinked rubber excellent in cut resistance and weather resistance. The sidewalls 6 prevent damage to the carcass 12.

The clinches 8 are disposed almost inward of the sidewalls 6, respectively, in the radial direction. The clinches 8 are disposed outward of the beads 10 and the carcass 12 in the axial direction. The clinches 8 are formed from crosslinked rubber excellent in wear resistance. The clinch 8 comes into contact with a flange of a rim.

The beads 10 are disposed inward of the clinches 8, respectively, in the axial direction. Each bead 10 includes a core 28 and an apex 30 that extends outward from the core 28 in the radial direction. The core 28 is ring-shaped, and includes a wound non-stretchable wire. A typical material of the wire is steel. The apex 30 is tapered outward in the radial direction. The apex 30 is formed from highly hard crosslinked rubber.

The carcass 12 includes a carcass ply 32. The carcass ply 32 is extended on and between the beads 10 on both sides, along the tread 4 and the sidewalls 6. The carcass ply 32 is turned up around the cores 28 from the inner side toward the outer side in the axial direction. By the carcass ply 32 being turned up, the carcass ply 32 has a main portion 34 and turned-up portions 35.

The carcass ply 32 includes multiple cords aligned with each other and a topping rubber, which is not shown. An absolute value of an angle of each cord relative to the equator plane is from 75° to 90°. In other words, the carcass 12 has a radial structure. The cords are formed from an organic fiber. Preferable examples of the organic fiber include polyester fibers, nylon fibers, rayon fibers, polyethylene naphthalate fibers, and aramid fibers. The carcass 12 may include two or more plies.

The belt 14 is disposed radially inward of the tread 4. The belt 14 is layered over the carcass 12. The belt 14 reinforces the carcass 12. The belt 14 includes an inner layer 36 and an outer layer 38. As shown in FIG. 1, in the present embodiment, the width of the inner layer 36 is greater than the width of the outer layer 38. The belt 14 may include three or more layers.

The band 16 is disposed radially inward of the tread 4. The band 16 is disposed radially outward of the belt 14. The band 16 is layered over the belt 14. The band 16 includes a cord and a topping rubber. The cord is helically wound. The band 16 has a so-called jointless structure. The cord extends substantially in the circumferential direction. An angle of the cord relative to the circumferential direction is less than or equal to 5°, and more preferably less than or equal to 2°. The band 16 can contribute to stiffness of the tire 2. The band 16 can reduce influence of a centrifugal force that acts during running. The tire 2 is excellent in high speed stability. A material of the cord is steel. An organic fiber may be used for the cord. Preferable examples of the organic fiber include nylon fibers, polyester fibers, rayon fibers, polyethylene naphthalate fibers, and aramid fibers.

The inner liner 18 is disposed inward of the carcass 12. The inner liner 18 is joined to the inner surface of the carcass 12. The inner liner 18 is formed from crosslinked rubber. For the inner liner 18, rubber excellent in airtightness is used. Atypical base rubber of the inner liner 18 is isobutylene-isoprene-rubber or halogenated isobutylene-isoprene-rubber. The inner liner 18 maintains internal pressure of the tire 2.

The chafers 19 are disposed near the beads 10, respectively. When the tire 2 is mounted on a rim, the chafers 19 come into contact with the rim. By the contact, portions near the beads 10 are protected. In the present embodiment, the chafers 19 are formed from a fabric and rubber impregnated into the fabric. The chafers 19 may be integrated with the clinches 8. In this case, the material of the chafers 19 is the same as the material of the clinches 8.

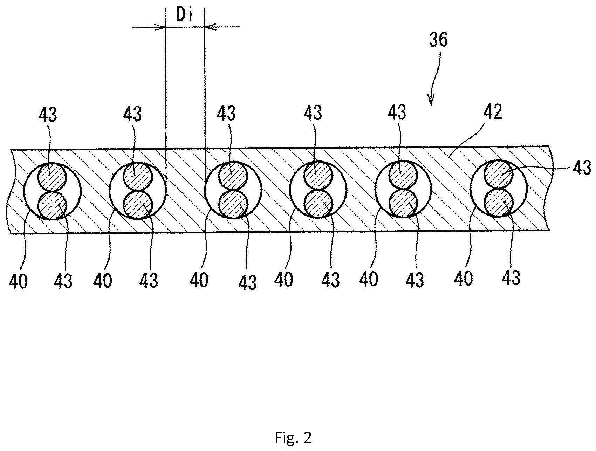

FIG. 2 is an enlarged cross-sectional view of a part of the inner layer 36 of the belt 14. The inner layer 36 includes multiple cords 40 aligned with each other, and a topping rubber 42. FIG. 2 shows a cross-section perpendicular to a direction in which the cords 40 extend. As shown in FIG. 2, the topping rubber 42 covers the cords 40. A material of the cords 40 is steel. In the present embodiment, each cord 40 is formed by two element wires 43 formed from steel being twisted together. The outer layer 38 has the same structure as the inner layer 36, which is not shown. That is, the outer layer 38 includes multiple cords aligned with each other, and a topping rubber. A material of the cords is steel. Each cord is formed by two element wires formed from steel being twisted together. In the present embodiment, the cords 40 of the inner layer 36 and the cords of the outer layer 38 have the same structure. The cord 40 of the inner layer 36 and the cord of the outer layer 38 may have different structures. In the present embodiment, a composition of the topping rubber 42 of the inner layer 36 is the same as a composition of the topping rubber of the outer layer 38. A composition of the topping rubber 42 of the inner layer 36 and a composition of the topping rubber of the outer layer 38 may be different from each other.

When CV represents a volume of the total of all the cords 40 of the inner layer 36 and all the cords of the outer layer 38, and BV represents the total volume of the belt 14 that includes the inner layer 36 and the outer layer 38, a percentage (CV/BV) of the volume CV to the volume BV is greater than or equal to 11% and not greater than 14% in the tire 2. The thickness of each of the cords 40 of the inner layer 36 and the cords of the outer layer 38, and the intervals between the cords 40 of the inner layer 36 and the intervals between the cords of the outer layer 38 are determined such that the percentage (CV/BV) is greater than or equal to 11% and not greater than 14%. The size of the topping rubber 42 of the inner layer 36 and the size of the topping rubber of the outer layer are determined such that the percentage (CV/BV) is greater than or equal to 11% and not greater than 14%.

In the present embodiment, the inner layer 36 and the outer layer 38 have the same structure. That is, when CVi represents the volume of the total of all the cords 40 of the inner layer 36, and BVi represents the total volume of the inner layer 36, a percentage (CVi/BVi) of the volume CVi to the volume BVi is greater than or equal to 11% and not greater than 14%. When CVo represents the volume of the total of all the cords of the outer layer 38, and BVo represents the total volume of the outer layer 38, a percentage (CVo/BVo) of the volume CVo to the volume BVo is greater than or equal to 11% and not greater than 14%.

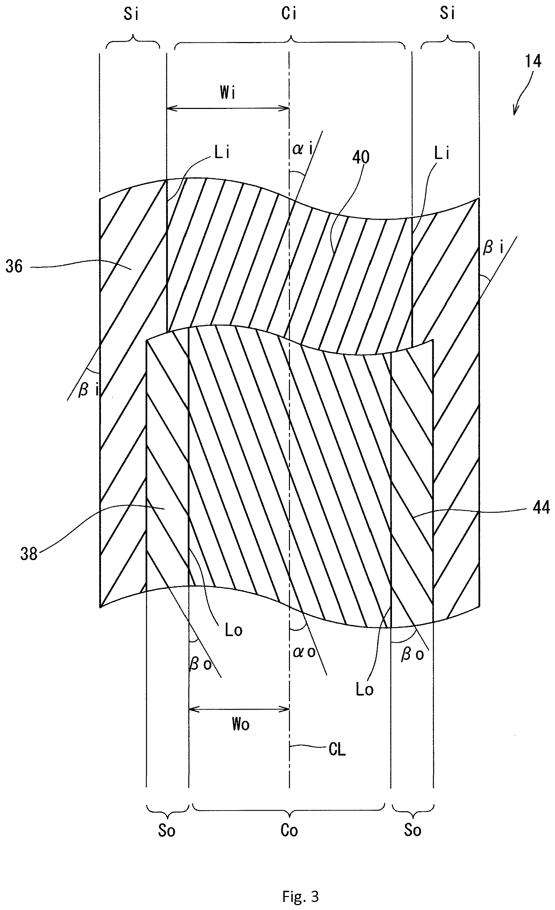

FIG. 3 is a schematic diagram illustrating the structure of the belt 14. In FIG. 3, the up-down direction represents the circumferential direction of the tire 2, the right-left direction represents the axial direction of the tire 2, and the direction perpendicular to the surface of the drawing sheet represents the radial direction of the tire 2. As shown in FIG. 3, the cords 40 of the inner layer 36 and the cords 44 of the outer layer 38 are tilted relative to the circumferential direction. A direction in which the cords 40 of the inner layer 36 are tilted relative to the circumferential direction is opposite to a direction in which the cords 44 of the outer layer 38 are tilted relative to the circumferential direction.

As shown in FIG. 3, in the present embodiment, an angle at which each cord 40 of the inner layer 36 is tilted is changed at a pair of imaginary straight lines Li that extend as boundaries in the circumferential direction. A portion between the paired straight lines Li is a center portion Ci of the inner layer 36. Portions outward of the paired straight lines Li in the axial direction are shoulder portions Si of the inner layer 36. Reference character αi represents an angle at which each cord 40 of the inner layer 36 is tiled relative to the circumferential direction in the center portion Ci of the inner layer 36. Reference character βi represents an angle at which each cord 40 of the inner layer 36 is tilted relative to the circumferential direction in each shoulder portion Si of the inner layer 36. In the present embodiment, the absolute value of the tilt angle βi is greater than the absolute value of the tilt angle αi. The cords 40 of the inner layer 36 are tilted relative to the circumferential direction in the shoulder portions Si of the inner layer 36 more greatly than in the center portion Ci thereof.

In FIG. 3, a double-headed arrow Wi represents a distance from the equator plane to the straight line Li in the axial direction. In FIG. 1, Wt represents a distance from the equator plane to a tread end in the axial direction. A ratio (Wi/Wt) of the distance Wi to the distance Wt is greater than or equal to 0.5 and not greater than 0.8.

As shown in FIG. 3, in the present embodiment, an angle at which each cord 44 of the outer layer 38 is tilted is changed at a pair of the imaginary straight lines Lo that extend as boundaries in the circumferential direction. A portion between the paired straight lines Lo is a center portion Co of the outer layer 38. Portions outward of the paired straight lines Lo in the axial direction are shoulder portions So of the outer layer 38. Reference character αo represents an angle at which each cord 44 of the outer layer 38 is tilted relative to the circumferential direction in the center portion Co of the outer layer 38. Reference character βo represents an angle at which each cord 44 of the outer layer 38 is tilted relative to the circumferential direction in each shoulder portion So of the outer layer 38. In the present embodiment, the absolute value of the tilt angle βo is greater than the absolute value of the tilt angle αo. The cords 44 of the outer layer 38 are tilted relative to the circumferential direction in the shoulder portions So of the outer layer 38 more greatly than in the center portion Co thereof.

In FIG. 3, a double-headed arrow Wo represents a distance from the equator plane to the straight line Lo in the axial direction. A ratio (Wo/Wt) of the distance Wo to the distance Wt is greater than or equal to 0.5 and not greater than 0.8.

In the present embodiment, a difference between the absolute value of the angle αi and the absolute value of the angle αo in the outer layer 38 is less than or equal to 2°. The absolute values of the angles αi and αo are each from 10° to 35°.

Hereinafter, the action and effect of the present invention will be described.

Steering stability is required to be further improved for a tire having a high load index. Durability is also required to be improved in a tire having a high load index. In particular, in a tire having a load index which is higher than or equal to 85, steering stability and durability are strongly required to be improved.

The inventors have studied the structure of a belt in detail. As a result, it has been found that a proportion between the volume of a belt and the volume of cords included in the belt exerts a great influence on steering stability and durability. It has been found that, when the proportion is appropriately set, steering stability and durability are advantageously improved also in the tire 2 having a high load index.

In the tire 2, the percentage (CV/BV) of the volume CV of the cords 40, 44 to the total volume BV of the belt 14 is greater than or equal to 11% and not greater than 14%. When the percentage (CV/BV) is greater than or equal to 11%, the belt 14 contributes to steering stability. Further, the belt 14 effectively reinforces the carcass 12. The tire 2 having the belt 14 is excellent in durability. When the percentage (CV/BV) is not greater than 14%, BEL due to rubber around the cords 40, 44 being reduced can be inhibited from occurring. The tire 2 is excellent in durability. In the tire 2, steering stability and durability are advantageously improved.

In the tire 2, when the percentage (CV/BV) is not greater than 14%, the stiffness of the tread 4 is appropriately maintained. This effectively contributes to ride comfort. The tire 2 allows ride comfort to be advantageously improved. Further, when the percentage (CV/BV) is not greater than 14% in the belt 14, the belt 14 is lightweight. The tire 2 having the belt 14 is lightweight. The belt 14 contributes to reduction of rolling resistance of the tire 2.

From the viewpoint of steering stability and durability being advantageously improved, the percentage (CV/BV) is more preferably greater than or equal to 12%. From the viewpoint that durability and ride comfort are advantageously improved and weight is reduced, the percentage (CV/BV) is more preferably not greater than 13.5%.

As described above, the tilt angle βi relative to the circumferential direction in the shoulder portions is preferably greater than the tilt angle αi relative to the circumferential direction in the center portion in the cord 40 of the inner layer 36. When the tilt angle αi of the cord 40 in the center portion is small in the belt 14, the belt 14 effectively contributes to stiffness of the tread 4 in the circumferential direction. The tire 2 is excellent in steering stability and durability during high speed running. When the tilt angle βi of the cord 40 in the shoulder portions is great in the belt 14, the belt 14 effectively contributes to stiffness of the tread 4 in the lateral direction. The tire 2 is excellent in steering stability and durability during cornering.

A difference between the tilt angle αi and the tilt angle βi is preferably greater than or equal to 1.5°. When the difference is greater than or equal to 1.5°, the belt 14 effectively contributes to stiffness in the circumferential direction and the lateral direction. The tire 2 is excellent in steering stability and durability during the straight running and cornering. The difference between the tilt angle αi and the tilt angle βi is preferably not greater than 2.5°. When the difference between the tilt angle αi and the tilt angle βi is not greater than 2.5°, reduction of ride comfort due to difference in stiffness between the center portion and the shoulder portions in the tread 4 can be inhibited. The tire 2 is excellent in ride comfort.

As described above, the tilt angle βo relative to the circumferential direction in the shoulder portions is preferably greater than the tilt angle αo relative to the circumferential direction in the center portion in the cord 44 of the outer layer 38. When the tilt angle αo of the cord 44 in the center portion is small in the belt 14, the belt 14 effectively contributes to stiffness of the tread 4 in the circumferential direction. The tire 2 is excellent in steering stability and durability during high speed running. When the tilt angle βo of the cord 44 in the shoulder portions is great in the belt 14, the belt 14 effectively contributes to stiffness of the tread 4 in the lateral direction. The tire 2 is excellent in steering stability and durability during cornering.

A difference between the tilt angle αo and the tilt angle βo is preferably greater than or equal to 1.5°. When the difference is greater than or equal to 1.5°, the belt 14 effectively contributes to stiffness in the circumferential direction and the lateral direction. The tire 2 is excellent in steering stability and durability during straight running and cornering. The difference between the tilt angle αo and the tilt angle βo is preferably not greater than 2.5°. When the difference between the tilt angle αo and the tilt angle βo is not greater than 2.5°, reduction of ride comfort due to difference in stiffness between the center portion and the shoulder portions in the tread 4 can be inhibited. The tire 2 is excellent in ride comfort.

As described above, in the belt 14 of the tire 2, the percentage (CV/BV) is greater than or equal to 11% and not greater than 14%. In order to allow the belt 14 to satisfy this condition, as described above, the tilt angle of the cord 40 in the shoulder portions Si of the inner layer 36 is made greater than the tilt angle of the cord in the center portion Ci thereof, and the tilt angle of the cord 44 in the shoulder portions So of the outer layer 38 is made greater than the tilt angle of the cord 44 in the center portion Co thereof. Thus, the belt 14 particularly effectively contributes to steering stability and durability. By combination thereof, the tire 2 excellent in steering stability and durability can be obtained.

As described above, in the inner layer 36 of the belt 14, a difference between the tilt angle αi and the tilt angle βi is greater than or equal to 1.5° and not greater than 2.5°. In the inner layer 36, the difference of the tilt angle of the cord 40 between the center portion Ci and the shoulder portions Si is appropriately set. In the outer layer 38 of the belt 14, a difference between the tilt angle αo and the tilt angle βo is greater than or equal to 1.5° and not greater than 2.5°. In the outer layer 38, the difference of the tilt angle of the cord 44 between the center portion Co and the shoulder portions So is appropriately set. The belt 14 can be obtained by the circumferential length of a drum in forming and a shape of a cavity surface of a mold in vulcanization being adjusted. In manufacturing of the tire 2, for each of the inner layer 36 and the outer layer 38, no specific process step is required for changing the tilt angle of the cord 40, 44 between the center portion and the shoulder portions. For the tire 2, productivity is maintained good.

In FIG. 2, a double-headed arrow Di represents the width of a gap between the cords 40 adjacent to each other in the inner layer 36. The width Di is preferably greater than or equal to 0.4 mm. When the width Di is greater than or equal to 0.4 mm in the inner layer 36, even if the belt 14 is deformed due to load, the cords 40 adjacent to each other are prevented from contacting with each other. In the inner layer 36, damage to the cords 40 due to contact between the cords 40, is prevented. The tire 2 including the inner layer 36 is excellent in durability. In this viewpoint, the width Di is more preferably greater than or equal to 0.45 mm.

A double-headed arrow Do, which is not shown, represents a width of a gap between the cords 44 adjacent to each other in the outer layer 38. The width Do is preferably greater than or equal to 0.4 mm. When the width Do is greater than or equal to 0.4 mm in the outer layer 38, even if the belt 14 is deformed due to load, the cords 44 adjacent to each other are prevented from contacting with each other. In the outer layer 38, damage to the cords 44 due to contact between the cords 44, is prevented. The tire 2 including the outer layer 38 is excellent in durability. In this viewpoint, the width Do is more preferably greater than or equal to 0.45 mm.

A double-headed arrow Dio, which is not shown, represents a width of a gap between the cord 40 of the inner layer 36 and the cord 44, adjacent thereto, of the outer layer 38. The width Dio is preferably greater than or equal to 0.4 mm. When the width Dio is greater than or equal to 0.4 mm in the belt 14, even if the belt 14 is deformed due to load, the cord 40 of the inner layer 36 and the cord 44, adjacent thereto, of the outer layer 38 are prevented from contacting with each other. In the belt 14, damage to the cords 40, 44 due to contact between the cords, is prevented. The tire 2 including the belt 14 is excellent in durability. In this viewpoint, the width Dio is more preferably greater than or equal to 0.45 mm.

The characteristics of a topping rubber of a belt exert an influence on performance of a tire. A hard topping rubber contributes to stiffness of the belt. A tire including a hard topping rubber is excellent in steering stability. However, a hard topping rubber causes reduction of impact absorption of the tire. The tire is poor in ride comfort. A tire including a soft topping rubber is excellent in ride comfort, but is poor in steering stability. The inventors have found that, when, in a tire in which the percentage (CV/BV) of the volume CV to the volume BV is greater than or equal to 11% and not greater than 14%, a complex elastic modulus of the topping rubber is appropriately set, steering stability and ride comfort can be further improved.

A complex elastic modulus E*i of the topping rubber 42 of the inner layer 36 is preferably higher than or equal to 8 MPa. When the complex elastic modulus E*i is higher than or equal to 8 MPa, the topping rubber 42 effectively contributes to stiffness of the belt 14. The tire is excellent in steering stability. In this viewpoint, the complex elastic modulus E*i is more preferably higher than or equal to 9 MPa. The complex elastic modulus E*i is preferably not higher than 12 MPa. When the complex elastic modulus E*i is not higher than 12 MPa, the stiffness of the belt 14 is appropriately set. The tire is excellent in ride comfort. In this viewpoint, the complex elastic modulus E*i is more preferably not higher than 11 MPa.

A complex elastic modulus E*o of the topping rubber of the outer layer 38 is preferably higher than or equal to 8 MPa. When the complex elastic modulus E*o is higher than or equal to 8 MPa, the topping rubber effectively contributes to stiffness of the belt 14. The tire is excellent in steering stability. In this viewpoint, the complex elastic modulus E*o is more preferably higher than or equal to 9 MPa. The complex elastic modulus E*o is preferably not higher than 12 MPa. When the complex elastic modulus E*o is not higher than 12 MPa, the stiffness of the belt 14 is appropriately set. The tire is excellent in ride comfort. In this view point, the complex elastic modulus E*o is more preferably not higher than 11 MPa.

In the present invention, the complex elastic moduli E*i and E*o are measured in compliance with the standard of "JIS K 6394", by using a viscoelasticity spectrometer (trade name "VESF-3" manufactured by Iwamoto Seisakusho), under the following measurement conditions.
Initial strain: 10%
Amplitude: ±2.0%
Frequency: 10 Hz
Deformation mode: tension
Measurement temperature: 70°C

In the present invention, the dimensions and angles of the components of the tire 2 are measured in a state where the tire 2 is mounted on a normal rim, and inflated with air to a normal internal pressure. During the measurement, no load is applied to the tire 2. In the description herein, the normal rim represents a rim that is specified according to the standard with which the tire 2 complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure. In the case of the tire 2 for a passenger car, in a state where the internal pressure is 180 kPa, the dimensions and angles are measured.

### [Examples]

Hereinafter, effects of the present invention will become apparent according to examples. However, the present invention should not be restrictively construed based on the description of examples.

### [Example 1]

A tire, of example 1, having the structure shown in FIG. 1 was obtained. The size of the tire was "205/60R16 96V L". The specifications of a belt of the tire are indicated in Table 1.

### [Comparative examples 1 to 3 and Examples 2 to 4]

Tires of comparative examples 1 to 3 and examples 2 to 4 were each obtained in the same manner as in example 1 except that the width Di and the width Do were different and the percentage (CV/BV) was as indicated in Tables 1 to 2.

### [Example 5]

A tire of example 5 was obtained in the same manner as in example 1 except that the width Dio was different and the percentage (CV/BV) was as indicated in Table 2.

### [Examples 6 to 9]

Tires of examples 6 to 9 were each obtained in the same manner as in example 1 except that the angles αi and αo were as indicated in Table 3.

### [Examples 10 to 13]

Tires of examples 10 to 13 were each obtained in the same manner as in example 1 except that the complex elastic modulus E*i and the complex elastic modulus E*o were as indicated in Table 4.

### [Steering stability and ride comfort]

Each tire was mounted on a normal rim (size: 6.5J), and inflated with air to an internal pressure of 250 kPa. The tires were mounted to rear wheels of a vehicle. A driver was caused to drive this vehicle in a test course, and to evaluate steering stability and ride comfort. The results are indicated below as grades in Tables 1 to 4 with 10 being the best grade. The greater the value is, the better the evaluation is.

### [Durability]

Each tire was mounted on a normal rim (size: 6.5J), and inflated with air to an internal pressure of 290 kPa. The tire was mounted to a drum type tire testing machine, and a vertical load of 10.27 kN was applied to the tire. Running with the tire on a drum having a radius of 1.7 m at a speed of 80 km/h was performed. A running distance until damage to the tire was confirmed, was measured. The results are indicated below as indexes in Tables 1 to 4. The greater the value is, the better the evaluation is.

### [Table 1]

**Table 1 Evaluation results**

| | | Comparative example 1 | Comparative example 2 | Example 2 | Example 1 |
|---|---|---|---|---|---|
| Percentage (CV/BV) [%] | | 9.6 | 10.7 | 11.3 | 12.3 |
| Inner layer | Width Di [mm] | 0.80 | 0.66 | 0.61 | 0.50 |
| | Angle αi [°] | 28 | 28 | 28 | 28 |
| | Angle βi [°] | 26 | 26 | 26 | 26 |
| | E*i [MPa] | 10 | 10 | 10 | 10 |
| Outer layer | Width Do [mm] | 0.80 | 0.66 | 0.61 | 0.50 |
| | Angle αo [°] | 28 | 28 | 28 | 28 |
| | Angle βo [°] | 26 | 26 | 26 | 26 |
| | E*o [MPa] | 10 | 10 | 10 | 10 |
| Width Dio [mm] | | 0.43 | 0.43 | 0.43 | 0.43 |
| Steering stability | | 5 | 5.5 | 6 | 7 |
| Ride comfort | | 7 | 7 | 7 | 7 |
| Durability | | 100 | 102 | 115 | 120 |

### [Table 2]

**Table 2 Evaluation results**

| | | Example 3 | Example 4 | Comparative example 3 | Example 5 |
|---|---|---|---|---|---|
| Percentage (CV/BV) [%] | | 13.4 | 14.0 | 15.5 | 14.0 |
| Inner layer | Width Di [mm] | 0.41 | 0.37 | 0.27 | 0.50 |
| | Angle αi [°] | 28 | 28 | 28 | 28 |
| | Angle βi [°] | 26 | 26 | 26 | 26 |
| | E*i [MPa] | 10 | 10 | 10 | 10 |
| Outer layer | Width Do [mm] | 0.41 | 0.37 | 0.27 | 0.50 |
| | Angle αo [°] | 28 | 28 | 28 | 28 |
| | Angle βo [°] | 26 | 26 | 26 | 26 |
| | E*o [MPa] | 10 | 10 | 10 | 10 |
| Width Dio [mm] | | 0.43 | 0.43 | 0.43 | 0.31 |
| Steering stability | | 7 | 7 | 7 | 7 |
| Ride comfort | | 6.5 | 6 | 5 | 6.5 |
| Durability | | 110 | 100 | 95 | 100 |

### [Table 3]

**Table 3 Evaluation results**

| | | Example 6 | Example 7 | Example 8 | Example 9 |
|---|---|---|---|---|---|
| Percentage (CV/BV) [%] | | 12.3 | 12.3 | 12.3 | 12.3 |
| Inner layer | Width Di [mm] | 0.50 | 0.50 | 0.50 | 0.50 |
| | Angle αi [°] | 26 | 27.5 | 28.8 | 30 |
| | Angle βi [°] | 26 | 26 | 26 | 26 |
| | E*i [MPa] | 10 | 10 | 10 | 10 |
| Outer layer | Width Do [mm] | 0.50 | 0.50 | 0.50 | 0.50 |
| | Angle αo [°] | 26 | 27.5 | 28.8 | 30 |
| | Angle βo [°] | 26 | 26 | 26 | 26 |
| | E*o [MPa] | 10 | 10 | 10 | 10 |
| Width Dio [mm] | | 0.43 | 0.43 | 0.43 | 0.43 |
| Steering stability | | 6.5 | 7 | 7 | 7 |
| Ride comfort | | 7 | 7 | 6.5 | 6 |
| Durability | | 110 | 120 | 120 | 120 |

### [Table 4]

**Table 4 Evaluation results**

| | | Example 10 | Example 11 | Example 12 | Example 13 |
|---|---|---|---|---|---|
| Percentage (CV/BV) [%] | | 12.3 | 12.3 | 12.3 | 12.3 |
| Inner layer | Width Di [mm] | 0.50 | 0.50 | 0.50 | 0.50 |
| | Angle αi [°] | 28 | 28 | 28 | 28 |
| | Angle βi [°] | 26 | 26 | 26 | 26 |
| | E*i [MPa] | 7.5 | 8 | 12 | 12.5 |
| Outer layer | Width Do [mm] | 0.50 | 0.50 | 0.50 | 0.50 |
| | Angle αo [°] | 28 | 28 | 28 | 28 |
| | Angle βo [°] | 26 | 26 | 26 | 26 |
| | E*o [MPa] | 7.5 | 8 | 12 | 12.5 |
| Width Dio [mm] | | 0.43 | 0.43 | 0.43 | 0.43 |
| Steering stability | | 6 | 6.5 | 7 | 7 |
| Ride comfort | | 7 | 7 | 6.5 | 6 |
| Durability | | 120 | 120 | 120 | 120 |

As indicated in Tables 1 to 4, the tires of examples are more excellent in the values than the tires of comparative examples. The evaluation result clearly indicates that the present invention is superior.

### [Industrial Applicability]

The tire according to the present invention can be mounted to various vehicles.

### [Description of the Reference Characters]

2···tire
4···tread
6···sidewall
8···clinch
10···bead
12···carcass
14···belt
16···band
18···inner liner
19···chafer
20···tread surface
22···groove
24···base layer
26···cap layer
28···core
30···apex
32···carcass ply
34···main portion
35···turned-up portion
36···inner layer
38···outer layer
40···cord of inner layer
42···topping rubber
43···element wire
44···cord of outer layer

## Claims

1. A pneumatic tire (2) comprising:
a tread (4) having an outer surface forming a tread surface (20); and
a belt (14) disposed inward of the tread (4) in a radial direction,
wherein the belt (14) includes an inner layer (36), and an outer layer (38) layered outward of the inner layer (36) in the radial direction,
wherein the inner layer (36) and the outer layer (38) each include multiple cords (40, 44) which are formed from steel and aligned with each other,
wherein a percentage (CV/BV) of a volume (CV) of the cords (40, 44) to a total volume (BV) of the belt (14) is greater than or equal to 11% and not greater than 14%,
wherein the cords (40) of the inner layer (36) and the cords (44) of the outer layer (38) are tilted relative to a circumferential direction, and
wherein a direction in which the cords (40) of the inner layer (36) are tilted relative to the circumferential direction and a direction in which the cords (44) of the outer layer (38) are tilted relative to the circumferential direction are opposite to each other,
**characterized in that**
in the inner layer (36), an absolute value of a tilt angle αi of each cord (40) relative to the circumferential direction in a center portion (Ci) of the inner layer (36) is less than an absolute value of a tilt angle βi of each cord (40) relative to the circumferential direction in shoulder portions (Si) of the inner layer (36),
a difference between the angle αi and the angle βi is greater than or equal to 1.5° and not greater than 2.5°,
in the outer layer (38), an absolute value of a tilt angle αo of each cord (44) relative to the circumferential direction in a center portion (Co) of the outer layer (38) is less than an absolute value of a tilt angle βo of each cord (44) relative to the circumferential direction in shoulder portions (So) of the outer layer (38),
a difference between the angle αo and the angle βo is greater than or equal to 1.5° and not greater than 2.5°,
absolute values of the angles αi and αo are each from 10 degrees to 35 degrees, and
the tire (2) further comprising a band (16) including a cord and a topping rubber, wherein the cord extends at an angle of less than or equal 5 degrees with respect to the tire circumferential direction.

2. The tire (2) according to claim 1, wherein,
in the inner layer (36), a width of a gap (Di) between the cords (40) adjacent to each other is greater than or equal to 0.4 mm, and
in the outer layer (38), a width of a gap (Do) between the cords (44) adjacent to each other is greater than or equal to 0.4 mm.

3. The tire (2) according to any one of claims 1 or 2, wherein a width of a gap (Dio) between the cord (40) of the inner layer (36) and the cord (44) of the outer layer (38) is greater than or equal to 0.4 mm.

4. The tire (2) according to any one of claims 1 to 3, wherein
each of the inner layer (36) and the outer layer (38) further includes topping rubber, and
a complex elastic modulus E*i of the topping rubber (42) of the inner layer (36) at 70° is higher than or equal to 8 MPa and not higher than 12 MPa, and
a complex elastic modulus E*o of the topping rubber of the outer layer (38) at 70° is higher than or equal to 8 MPa and not higher than 12 MPa.

## Patentansprüche

1. Luftreifen (2), umfassend:
ein Profil (4) mit einer Außenfläche, die eine Lauffläche (20) bildet; und
einen Gürtel (14), der in einer radialen Richtung innerhalb des Profils (4) angeordnet ist,
wobei der Gürtel (14) eine innere Lage (36) und eine äußere Lage (38) aufweist, die in der radialen Richtung außerhalb der inneren Lage (36) geschichtet ist,
wobei die innere Lage (36) und die äußere Lage (38) jeweils mehrere Korde (40, 44) aufweisen, die aus Stahl gebildet und miteinander ausgerichtet sind,
wobei ein Prozentanteil (CV/BV) eines Volumens (CV) der Korde (40, 44) bezogen auf ein Gesamtvolumen (BV) des Gürtels (14) größer als oder gleich 11 % und nicht größer als 14 % ist,
wobei die Korde (40) der inneren Lage (36) und die Korde (44) der äußeren Lage (38) relativ zu einer Umfangsrichtung geneigt sind und
wobei eine Richtung, in der die Korde (40) der inneren Lage (36) relativ zu der Umfangsrichtung geneigt sind, und eine Richtung, in der die Korde (44) der äußeren Lage (38) relativ zu der Umfangsrichtung geneigt sind, einander entgegengesetzt sind,
**dadurch gekennzeichnet, dass**
in der inneren Lage (36) ein Absolutwert eines Neigungswinkels αi jedes Kordes (40) relativ zu der Umfangsrichtung in einem zentralen Abschnitt (Ci) der inneren Lage (36) kleiner als ein Absolutwert eines Neigungswinkels βi jedes Kordes (40) relativ zu der Umfangsrichtung in Schulterabschnitten (Si) der inneren Lage (36) ist,
eine Differenz zwischen dem Winkel αi und dem Winkel βi größer als oder gleich 1,5 ° und nicht größer als 2,5 ° ist,
in der äußeren Lage (38) ein Absolutwert eines Neigungswinkels αo jedes Kordes (44) relativ zu der Umfangsrichtung in einem zentralen Abschnitt (Co) der äußeren Lage (38) kleiner als ein Absolutwert eines Neigungswinkels βo jedes Kordes (44) relativ zu der Umfangsrichtung in Schulterabschnitten (So) der äußeren Lage (38) ist,
eine Differenz zwischen dem Winkel αo und dem Winkel βo größer als oder gleich 1,5 ° und nicht größer als 2,5 ° ist,
Absolutwerte der Winkel αi und αo jeweils von 10 Grad bis 35 Grad reichen und
der Reifen (2) ferner ein Band (16) umfasst, das einen Kord und einen Beschichtungsgummi aufweist, wobei sich der Kord unter einem Winkel von weniger als oder gleich 5 Grad bezogen auf die Umfangsrichtung des Reifens erstreckt.

2. Reifen (2) nach Anspruch 1, wobei
in der inneren Lage (36) eine Breite einer Lücke (Di) zwischen den Korden (40), die zueinander benachbart sind, größer als oder gleich 0,4 mm ist und
in der äußeren Lage (38) eine Breite einer Lücke (Do) zwischen den Korden (44), die zueinander benachbart sind, größer als oder gleich 0,4 mm ist.

3. Reifen (2) nach Anspruch 1 oder 2, wobei eine Breite einer Lücke (Dio) zwischen dem Kord (40) der inneren Lage (36) und dem Kord (44) der äußeren Lage (38) größer als oder gleich 0,4 mm ist.

4. Reifen (2) nach einem der Ansprüche 1 bis 3, wobei
jede von der inneren Lage (36) und der äußeren Lage (38) ferner einen Beschichtungsgummi aufweist und
ein komplexer Elastizitätsmodul E*i des Beschichtungsgummis (42) der inneren Lage (36) bei 70 ° höher als oder gleich 8 MPa und nicht höher als 12 MPa ist und
ein komplexer Elastizitätsmodul E*o des Beschichtungsgummis der äußeren Lage (38) bei 70 ° höher als oder gleich 8 MPa und nicht höher als 12 MPa ist.

## Revendications

1. Bandage pneumatique (2) comprenant :
une bande de roulement (4) ayant une surface extérieure formant une surface de roulement (20) ; et
une ceinture (14) disposée à l'intérieur de la bande de roulement (4) dans une direction radiale,
dans lequel la ceinture (14) inclut une couche intérieure (36) et une couche extérieure (38) posée en couche à l'extérieur de la couche intérieure (36) dans la direction radiale,
dans lequel la couche intérieure (36) et la couche extérieure (38) incluent chacune une multiplicité de câblés (40, 44) qui sont formés en aciers qui sont alignés les uns avec les autres,
dans lequel un pourcentage (CV/BV) d'un volume (CV) des câblés (40, 44) sur un volume total (BV) de la ceinture (14) est supérieur ou égal à 11 % et n'est pas supérieur à 14 %,
dans lequel les câblés (40) de la couche intérieure (36) et les câblés (44) de la couche extérieure (38) sont inclinés par rapport à une direction circonférentielle, et
dans lequel une direction dans laquelle les câblés (40) de la couche intérieure (36) sont inclinés par rapport à la direction circonférentielle et une direction dans laquelle les câblés (44) de la couche extérieure (38) sont inclinés par rapport à la direction circonférentielle sont opposées l'une à l'autre,
**caractérisé en ce que**
dans la couche intérieure (36), une valeur absolue d'un angle d'inclinaison αi de chaque câblé (40) par rapport à la direction circonférentielle dans une portion centrale (Ci) de la couche intérieure (36) est inférieure à une valeur absolue d'un angle d'inclinaison βi de chaque câblé (40) par rapport à la direction circonférentielle dans des portions d'épaulement (Si) de la couche intérieure (36),
une différence entre l'angle αi et l'angle βi est supérieure ou égale à 1,5° et n'est pas supérieure à 2,5°,
dans la couche extérieure (38), une valeur absolue d'un angle d'inclinaison αo de chaque câblé (44) par rapport à la direction circonférentielle dans une portion centrale (Co) de la couche extérieure (38) est inférieure à une valeur absolue d'un angle d'inclinaison βo de chaque câblé (44) par rapport à la direction circonférentielle dans des portions d'épaulement (So) de la couche extérieure (38),
une différence entre l'angle αo et l'angle βo est supérieure ou égale à 1,5° et n'est pas supérieure à 2,5°,
les valeurs absolues des angles αi et αo sont chacune dans la plage de 10° à 35°, et
le pneumatique (2) comprend en outre une bande (16) incluant un câblé et un caoutchouc d'enrobage, dans laquelle le câblé s'étend sous un angle inférieur ou égal à 5° par rapport à la direction circonférentielle du pneumatique.

2. Pneumatique (2) selon la revendication 1, dans lequel
dans la couche intérieure (36), une largeur d'un intervalle (Di) entre les câblés (40) adjacents les uns aux autres est supérieure ou égale à 0,4 mm, et
dans la couche extérieure (38), une largeur d'un intervalle (Do) entre les câblés (44) adjacents les uns aux autres est supérieure ou égale à 0,4 mm.

3. Pneumatique (2) selon l'une quelconque des revendications 1 ou 2, dans lequel une largeur d'un intervalle (Dio) entre le câblé (40) de la couche intérieure (36) et le câblé (44) de la couche extérieure (38) est supérieure ou égale à 0,4 mm.

4. Pneumatique (2) selon l'une quelconque des revendications 1 à 3, dans lequel
chacune de la couche intérieure (36) et de la couche extérieure (38) inclut en outre un caoutchouc d'enrobage, et
un module d'élasticité complexe E*i du caoutchouc d'enrobage (42) de la couche intérieure (36) à 70° est supérieur ou égal à 8 MPa et n'est pas supérieur à 12 MPa, et
un module d'élasticité complexe E*o du caoutchouc d'enrobage de la couche extérieure (38) à 70° est supérieur ou égal à 8 MPa et n'est pas supérieur à 12 MPa.
